Europäisches Patentamt

European Patent Office

Office européen des brevets

(19)

(11) **EP 1 231 748 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.$^7$: **H04L 25/06**

(21) Anmeldenummer: **01103107.7**

(22) Anmeldetag: **09.02.2001**

(54) **Verfahren und Anordnung zur Regelung der Entscheiderschwelle und der Abtasttaktphase eines Datenregenerators für ein binäres Signal**

Method and arrangement for adjusting the threshold level and the sampling phase of a data regenerator for a binary signal

Procédé et système pour ajuster le seuil de décision et la phase d'échantillonnage d'un régénérateur de données pour un signal binaire

(84) Benannte Vertragsstaaten:
**DE ES FR GB IT**

(43) Veröffentlichungstag der Anmeldung:
**14.08.2002 Patentblatt 2002/33**

(73) Patentinhaber: **SIEMENS AKTIENGESELLSCHAFT 80333 München (DE)**

(72) Erfinder:
- **Bock, Harald, Dr. 86150 Augsburg (DE)**
- **Faerbert, Andreas, Dr. 81827 München (DE)**
- **Peisl, Wolfgang, Dr. 81245 München (DE)**

(56) Entgegenhaltungen:
**EP-A- 0 328 266        EP-A- 1 085 713**
**WO-A-99/12315          DE-A- 19 717 642**

EP 1 231 748 B1

**Beschreibung**

Die Erfindung betrifft ein Verfahren zur Regelung von Entscheiderschwelle und Abtasttaktphase eines Datenregenerators für ein binäres Signal durch Auswertung von Fehlerkorrektursignalen.

Es sind zahlreiche Schaltungen bekannt, bei denen die Entscheiderschwelle eines Datenregenerators und die Phase des Abtasttaktes auf Grund von Kriterien korrigiert werden, die aus dem empfangenen Signal gewonnen werden. Daneben gibt es eine weitere Gruppe von Datenregeneratoren, die bei einem redundanten Binärsignal die Fehlererkennung/Fehlerkorrektur zur Steuerung der Entscheiderschwelle und der Phasenlage nutzen.

Aus der Europäischen Patentanmeldung EP 0 328 266 A2 ist ein Datenregenerator bekannt, der drei Abtaststufen mit unterschiedlichen Abtastschwellen aufweist. Die abgetasteten Datenbits werden miteinander verglichen. Durch paralleles Verschieben der Schwellen wird versucht für die mittlere Abtastschwelle ei9n Optimum zu finden.

Aus der Offenlegungsschrift DE 197 17 642 A1 ist ein Verfahren bekannt, bei dem die Entscheiderschwelle und die Phase mit Hilfe einer Steuerung variiert werden, bis die mit Hilfe eines Fehler korrigierenden Codes festgestellte Fehlerrate ein Minimum erreicht. Bei diesem Verfahren pendeln die Phasenlage und die Schwelle stets um das Optimum herum.

Aus dem Patent US 4,360,926 ist eine digitale PLL (Phasenregeleinrichtung) bekannt, bei der sowohl ein Phasenvergleich zwischen dem empfangenen Signal und dem Abtasttakt durchge führt wird, als auch zusätzlich Information des Fehlerdetektors zur Optimierung verwendet wird.

Aus der Patentanmeldung WO 99/12315 A1 ist ein Verfahren und ein Datenregenerator zur Minimierung von Bitfehlern bekannt, der für Systeme mit Vorwärtsfehlerkorrektur geeignet ist. *Um ein Kriterium zur Korrektur der Phase eines Abtasttaktsignals zu gewinnen werden Korrektursignale zusammen mit den aktuellen Bitfolgen ausgewertet.*

Aufgabe der Erfindung ist es, dies Verfahren zur Optimierung der Entscheiderschwelle und der Phasenlage des Abtasttaktes *zu vereinfachen.* Außerdem ist eine geeignete Anordnungen anzugeben.

Diese Aufgabe wird durch die unabhängigen Ansprüche gelöst.

Sowohl die Abtastphase als auch Entscheiderschwelle können durch Verwendung der Korrektursignale in Zusammenhang mit der Berücksichtigung des logischen Zustandes des binären Signals geregelt werden.

Ein Vorteil dieses Verfahrens ist es, dass es auch bei größeren Bitfehlerraten arbeitet.

Die Korrektursignale werden zur Regelung der Phase eines Abtasttaktes verwendet. Hierzu wird überprüft, ob die Anzahl der Korrekturen vor oder nach einem Übergang zwischen zwei unterschiedlichen (korrigierten) Binärzuständen größer ist. *Es ist hierbei nicht erforderlich, sich auf bestimmte Signalfolgen zu beschränken, da sich nicht relevante Korrekturvorgänge statistisch aufheben.*

Zur Regelung der Entscheiderschwelle wird die Differenz zwischen der Anzahl der korrigierten 1-Bits, das heißt, das korrigierte Bit wird eine binäre Null, und der Anzahl der korrigierten 0-Bits, hier erfolgt eine Korrektur in eine binäre Eins, verwendet. Es ist auch die Auswertung des Quotienten aus korrigierten 1-Bits zu 0-Bits (oder umgekehrt) möglich. Bei ungleichgewichtigen Codes sollte die Relation von binären Einsen zu binären Nullen berücksichtigt werden.

Eine entsprechende Anordnung ist rein digital realisierbar, so dass Probleme durch Temperaturabhängigkeit oder Alterung wie bei den herkömmlichen Taktregeneratoren vermieden werden.

Vorteilhaft ist auch eine Überwachung der Häufigkeit von Korrekturen, die bei gleichbleibenden Übertragungsbedingungen die Arbeitsweise der Regelung wiedergibt. Bei optimierter Abtastung ist die Häufigkeit von Korrekturen ein Kriterium für die Signalqualität, das außerdem zur Steuerung der Zeitkonstanten der Regeleinrichtungen verwendet wird. Die Erfindung wird anhand eines Ausführungsbeispieles näher erläutert.

Es zeigen:

Figur 1     ein Prinzipschaltbild eines Datenregenerators,

Figur 2     ein Zeitdiagramm zur Regelung der Entscheiderschwelle und

Figur 3     ein Zeitdiagramm zur Regelung der Phase des Abtasttaktes.

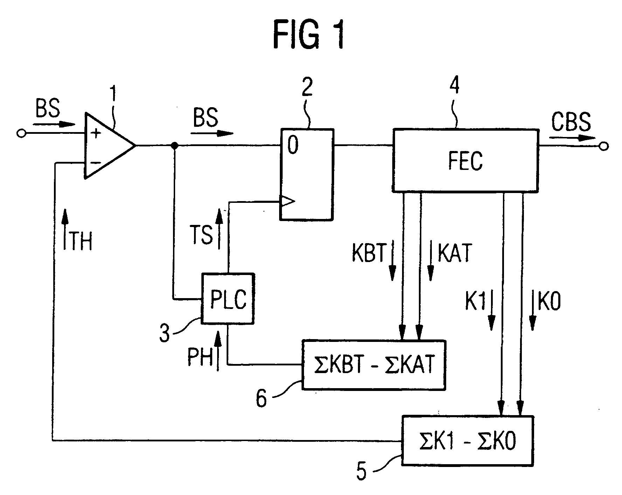

In **Figur 1** ist der erfindungsgemäße Datenregenerator 1 - 6 dargestellt. Einer Entscheiderstufe 1 wird das Signal BS zugeführt und mit einem Vergleichswert, der Entscheiderschwelle TH, verglichen. Das binäre Ausgangssignal der Entscheiderstufe 1 wird dem Dateneingang D einer Abtastkippstufe 2 zugeführt und dessen Datenbits werden im Idealfall jeweils in der Bitmitte mit einem Abtasttaktsignal TS abgetaktet (gespeichert), das von einem nicht dargestellten gesteuerten Oszillator (VCO) eines Taktregenerators 3 (z. B. eines Phasenregelkreises PLL) erzeugt wird. Vom Datenausgang der Abtastkippstufe 2 gelangt das binäre Signal zu einer Fehlerkorrektureinrichtung (FEC) 4, die an ihrem Datenausgang ein korrigiertes Binärsignal CBS abgibt.

Die Fehlerkorrektureinrichtung 4 erkennt auf Grund von redundanter Information, welche Bits des binären Signals gestört sind und korrigiert diese durch Invertieren. Die Korrektursignale werden hier mit dem Binärzustand des noch unkorri gierten Bits kombiniert (gleichwertig ist eine logische Verknüpfung mit dem Zustand des korrigierten Bits) und als Korrektursignale K1 beziehungsweise K0 ausgegeben. K1 bedeutet, dass ein als Binärzustand "1" in der Abtastkippstufe 2 gespeichertes Bit in den Binärzustand "0" korrigiert wird; K0 bedeutet eine Korrektur des Binärzustandes "0" in den Binärzustand "1". Ein Entscheiderschwelle-Regler 5 bildet die Differenz zwischen den Summen der K1-Korrektursignale und K0-Korrektursignale $\Sigma$K1 - $\Sigma$K0 und verschiebt entsprechend die Schwelle TH der Entscheiderstufe 1. Die Meßintervalle können der Bitfehlerrate angepaßt werden; auch kann bis zu einer bestimmten Anzahl von Korrekturvorgängen gezählt werden oder beide Methoden werden kombiniert.

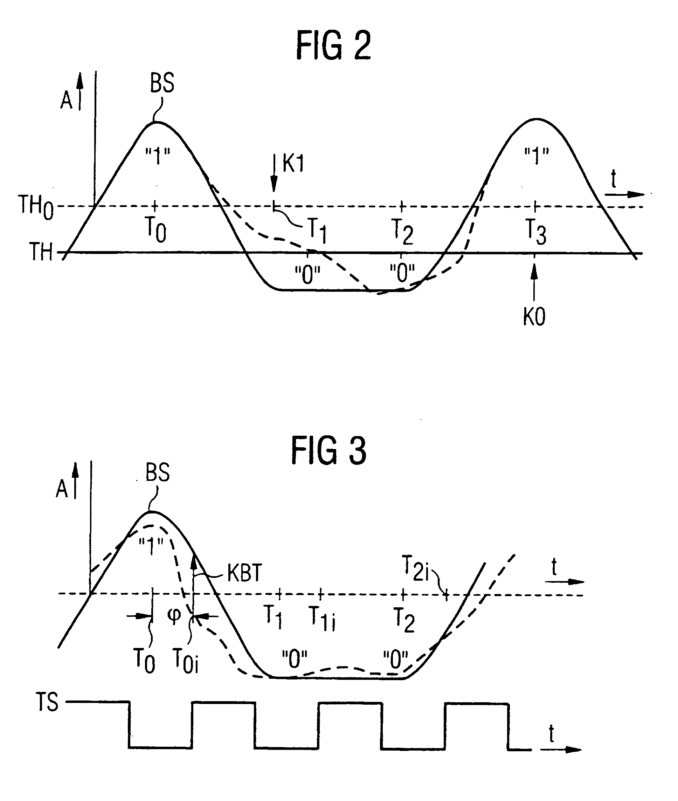

Im Diagramm **Figur 2** ist der zeitliche Verlauf der Amplitude A eines ungestörte binären Signals BS als Funktion der Zeit t als durchgezogene Linie dargestellt, das empfangsseitig zu Zeitpunkten $T_0$, $T_1$, $T_2$, ... abgetastet wird. Die Entscheiderschwelle (Abtastschwelle) TH liegt jedoch nicht bei ihrem I-dealwert $TH_o$ (gestrichelt), sondern wesentlich tiefer. Ein ideales Signal BS wird jetzt noch richtig abgetastet. Kommen jetzt aber Signalverzerrungen hinzu, dann ist bei einem gestörten Signal - gestrichelt dargestellt - eine Verfälschung der binären "0" in eine binäre "1" sehr leicht möglich, was durch einen Korrekturvorgang K1 wieder rückgängig gemacht wird. Überwiegen die Korrektursignale K1 gegenüber den weit weniger wahrscheinlichen Korrektursignalen K0, dann muss die Entscheiderschwelle TH in Richtung der optimalen Schwelle $S_o$, hier hin zu höheren Werten, verschoben werden. Unter der Voraussetzung, dass die binäre "1" den höheren Pegel aufweist, gilt für die Entscheiderschwelle TH:

$$(1) \qquad \Sigma K1 > \Sigma K0 \Rightarrow \text{TH höher}$$

$$(2) \qquad \Sigma K1 < \Sigma K0 \Rightarrow \text{TH niedriger}$$

Bei einem ungleichgewichtigen Code gilt entsprechend (einschließlich mathematischer Umformungen):

$$(3) \qquad \frac{\Sigma K1}{N0} > \frac{\Sigma K0}{N1} \Rightarrow \text{TH höher}$$

$$(4) \qquad \frac{\Sigma K1}{N0} < \frac{\Sigma K0}{N1} \Rightarrow \text{TH niedriger}$$

Ebenso können, wie einleitend erwähnt, die Quotienten der aufsummierten Korrektursignale mit dem Quotienten der Summe der binären Nullen N0 mit der Summe der binären Einsen N1 verglichen werden, wodurch ebenfalls das Verhältnis von binären Nullen zu Einsen berücksichtigt wird.

Der Bereich, in dem eine Verschiebung der Entscheiderschwelle möglich ist, kann begrenzt werden, so dass der Taktregenerator bzw. der Empfänger stets im funktionsfähig bleibt.

In einer ähnlichen Weise werden Korrektursignale KBT (before transition) und KAT vor (after transition) und nach dem Übergang zwischen zwei Binärzuständen gewonnen. Dies erfolgt wieder durch Kombination des Korrektursignals mit jeweils einem (korrigierten) Bit vor und nach dem Übergang zwischen zwei binären Zuständen des korrigierten Signals, das in der Regel dem ursprünglichen binären Signal entspricht.

**Figur 3** zeigt wieder den Amplitudenverlauf des binären Signals BS in Abhängigkeit von der Zeit t. Die Soll-Abtastzeitpunkte sind mit $T_0$, $T_1$, $T_2$, ... gekennzeichnet, die Ist-Zeitpunkte dagegen mit $T_{0i}$, $T_{1i}$, $T_{2i}$. Durch einen Phasen-Phasenfehler $\varphi$ des Abtastsignals gegenüber dem idealen Abtastzeitpunkt bzw. dem Signal, kurz bals Phase bezeichnet, werden Fehlabtastungen bei Zustandswechseln wahrscheinlicher. Dadurch, dass der Abtastzeitpunkt $T_{0i}$ näher an den Übergang zwischen den binären Zuständen heranrückt, erfolgt bei zusätzlichen Beeinflussungen/Störungen des binären Signals BS - gestrichelt dargestellt - eine "fehlerhafte" Abtastung. Hier wird ein O-Bit abgetastet, das durch einen Korrekturvorgang KBT in ein 1-Bit korrigiert wird. Zum Zeitpunkt $T_{1i}$ spielt die Phasenverschiebung des Taktsignals dagegen keine Rolle, da kein Signalübergang in der Nähe stattfindet. Erst in der Nahe des Zeitpunkts $T_{2i}$ ändert sich der binäre Zustand wieder von "0" in "1", wodurch die Wahrscheinlichkeit für eine fehlerhafte Abtastung wieder ansteigt. Bei der dargestellten Bitfolge wird es beim dem Übergang von "1" nach "0" durch den dann beibehaltenen Binärzustand "0" mit einer hohen Wahrscheinlichkeit mehr Phasen-Korrekturen KBT geben als nach dem Übergang.

Wird das Bit vor dem Signalübergang bei einem gestrichelt dargestellten gestörten Signals fälschlich als "0" abgetastet und anschließend korrigiert, wird ein Phasen-Korrektursignal KBT abgegeben, das hier die Korrektur einer binären "0" in eine "1" angibt. Da das nächste (gegebenenfalls korrigierte) Bit eine Null ist, ist im idealen oder ersatzweise korrigierten Binarsignal ein Übergang zwischen den Binärzuständen vorhanden. Wird dagegen das Bit nach dem Übergang korrigiert, wird ein Phasen-Korrektursignal KAT (<u>A</u>fter <u>T</u>ransition) abgegeben. Diese Signale werden in einem Phasenregler 6 summiert und die Summen miteinander verglichen. Das Ergebnis diese Vergleichs, ein Taktphasen-Korrektursignal PH, steuert bzw. korrigiert die Phasenlage des Taktsignals TS in Relation zum binären Signal BS bis die Anzahl beider Korrektursignale den gleichen Wert hat. Es gilt

$$(5) \quad \sum KBT > \sum KAT \Rightarrow \text{Phase TS beschleunigen bzw. Frequenz erhöhen}$$

$$(6) \quad \sum KBT < \sum KAT \Rightarrow \text{Phase TS verzögern bzw. Frequenz erniedrigen}$$

Die Phasendifferenz $\varphi$ des Taktsignals TS gegenüber dem idealen Abtastzeitpunkten $T_0$, $T_1$, $T_2$, ... für das binäre Signal BS ist beim dargestellten Beispiel zu verringern. Entsprechendes gilt bei einer voreilenden Phase des Taktsignals.

Im Ausführungsbeispiel Figur 1 wird die Phase des von dem Taktregenerator 3, hier als Phasenregelkreis (PLL) ausgebildet, erzeugten Taktsignals korrigiert. In der Regel wird die Korrektur gering sein und kann auch begrenzt werden. Die Veränderung der Phase kann in beliebiger Weise erfolgen, besonders einfach durch Eingriff in den Phasenregelkreis wie im Ausführungsbeispiel.

Ohne zusätzliche Maßnahmen arbeitet das Verfahren nur, wenn vor bzw. nach einem Übergang zwischen den Binärzuständen der Binärzustand für mindestens ein weiteres Bit erhalten bleibt. Bei einem 1010-Wechsel heben sich die Phasen-Korrektursignale mit großer Wahrscheinlichkeit auf; sie können auch durch Auswertung der Bitfolgen unterdrückt werden. Bei einem andauernden Wechsel von binären Nullen und binären Einsen wird die Phasenkorrektur ohne Zusatzmaßnahmen nicht erreicht; dieser Fall tritt jedoch bei einer üblichen Datenübertragung nicht auf und außerdem bleibt die Funktion der analogen Phasenregelung erhalten.

Durch eine Überwachung der Korrekturrate kann die übertagungsstrecke überprüft werden und die Regeleinrichtungen des Datenregenerators gesteuert werden.

**Patentansprüche**

**1.** Verfahren zur Regelung von Entscheiderschwelle (TH) und Abtastphase ($\varphi$) eines Datenregenerators, bei dem zur Regelung der Entscheiderschwelle (TH) als fehlerhaft erkannte 1-Bits und als fehlerhaft: erkannte 0-Bits gezählt werden, dann so ermittelte Summen ($\Sigma K1$) der als fehlerhaft erkannten 1-Bi ts und Summen ($\Sigma k0$) der als fehlerhaft erkannten 0-Bits ausgewertet werden und die Entscheiderschwelle (TH) derart verstellt wird, dass ein optimales Verhältnis der als fehlerhaft erkannten 1-Bits und 0-Bits erreicht wird, und bei dem eine Regelung der Abtastphase ($\varphi$) eines Abtasttaktsignals (TS) zur Phase eines binären Signals (BS) und der eines Datenregenerators durch Auswertung von Fehlerkorrektursignalen erfolgt,
**dadurch gekennzeichnet,**
**dass** zur Einstellung der Abtastphase ($\varphi$) als fehlerhaft erkannte Bits (KBT) vor einem Übergang zwischen Binärzuständen und als fehlerhaft erkannte Bits (KAT)nach einem Übergang zwischen den Binärzuständen als Phasen-Korrektursignale (KBT, KAT) separat gezählt und so erhaltene Summen ($\Sigma KBT$, $\Sigma KAT$) der Phasen-Korrektursignale zur Phasenkorrektur des Abtasttaktsignals (TS) ausgewertet werden und
**dass** die Phase des Abtasttaktsignals (TS) derart verstellt wird, dass zumindest annähernd die selbe Anzahl der als fehlerhaft erkannte Bits ($\Sigma KBT$, $\Sigma KAT$) vor und nach einem Übergang zwischen den Binärzuständen auftritt.

**2.** Verfahren nach Anspruch 1,
**dadurch gekennzeichnet,**
**dass** die Differenz ($\Sigma K1 - EK0$) zwischen den Summen der als fehlerhaft erkannten 1-Bits und 0-Bits gebildet wird und dass diese Differenz in ein Stellsignal für die Entscheiderschwelle (TH) umgesetzt wird.

**3.** Verfahren nach Anspruch 2,
**dadurch gekennzeichnet,**
**dass** bei gleichgewichtigen Codes die Entscheiderschwelle (TH) derart eingestellt wird, dass die Differenz ($\Sigma K1 - \Sigma K0$) Null wird.

**4.** Verfahren nach Anspruch 1,
**dadurch gekennzeichnet,**
**dass** bei ungleichgewichtigen Codes bei der Regelung der Entscheiderschwelle (TH) das Verhältnis von 1-Bits zu 0-Bits des binären Signals (BS) berücksichtigt wird.

**5.** Verfahren nach Anspruch 1,
**dadurch gekennzeichnet,**
**dass** bei ungleichgewichtigen Codes das Verhältnis von als fehlerhaft erkannten 1-Bits ($\Sigma$K1) zur Gesamtzahl der 0-Bits (N0) gebildet wird,
**dass** das Verhältnis der als fehlerhaft erkannten 0-Bits ($\Sigma$K0) zur Gesamtzahl (N0) der 1-Bits (N1) gebildet wird,
**dass** ein Vergleich beider Quotienten durchgeführt wird
und **dass** die Entscheiderschwelle auf Grund dieses Vergleichs derart eingestellt wird, dass die Differenz zwischen den Quotienten Null wird.

**6.** Verfahren nach einem der vorhergehenden Ansprüche,
**dadurch gekennzeichnet,**
**dass** Korrektursignale einer Fehlerkorrektureinrichtung (4) logisch kombiniert mit dem jeweiligen Binärzustand von als fehlerhaft erkannten Bits (K1, K0) ausgewertet werden.

**7.** Verfahren nach einem der vorhergehenden Ansprüche,
**dadurch gekennzeichnet,**
**dass** der Anteil der als fehlerhaft angesehen Bits zur Steuerung der Zeitkonstanten eines Reglers (5, 6) verwendet wird.

**8.** Verfahren nach einem der vorhergehenden Ansprüche,
**dadurch gekennzeichnet,**
**dass** die Regelung der Phase des Abtasttaktsignals (TS) durch eine analoge Phasenregelung erfolgt und
**daß** durch die Phasen-Korrektursignale (KBT, KAT) eine weitere Phasenkorrektur des Abtasttaktsignals (TS) erfolgt.

**9.** Datenregenerator zur Regelung von Entscheiderschwelle (TH) und Abtastphase ($\varphi$) mit einer Entscheiderstufe (1), der ein binäres Signal (BS) und die Entscheiderschwelle (TH) als Vergleichssignal (TH) zugeführt werden, mit einer Abtastkippstufe (2), deren Dateneingang (D) mit dem Ausgang der Entscheiderstufe (1) verbunden ist, und mit einem Taktregenerator (3), der ein Abtasttaktsignal (TS) für die Abtastkippstufe (2) erzeugt, mit dem das binäres Signal (BS) in der Abtastkippstufe (2) gespeichert wird,
mit einer Fehlerkorrektureinrichtung (4), die der Abtastkippstufe (3) nachgeschaltet ist, und
mit einem ersten Regler (5) zur Regelung der Entscheiderschwelle (TH), dem von der Fehlerkorrektureinrichtung (4) ein erstes Korrektursignal (K1) zugeführt wird, das eine Korrektur eines 1-Bits anzeigt, und dem ein zweites Korrektursignal (K0) zugeführt wird, das eine Korrektur eines 0-Bits angibt, wobei der erste Regler dafür angepaßt ist, (5) separat beide Korrektursignale (K1, K0) zu summieren,
dann eine so ermittelte Summe ($\Sigma$K1) der als fehlerhaft erkannten 1-Bits und eine Summe ($\Sigma$k0) der als fehlerhaft erkannten 0-Bits auszuwerten und die Ehtscheiderschwelle (TH) derart zu verstellen, dass ein optimales Verhältnis der als fehlerhaft erkannten 1-Bits und 0-Bits erreicht wird, und mit einem zweiten Regler (6), der dafür angepaßt ist, zur Regelung der Abtastphase ($\varphi$) des Abtasttaktsignals (TS) zur Phase des binären Signals (BS) die Fehlerkorrektursignale auszuwerten und den Taktregenerator (3) zu steuern,
**dadurch gekennzeichnet,**
**dass** zur Einstellung der Abtastphase ($\varphi$) eines Abtasttaktsignals (TS) dem zweiten Regler (6) von der Fehlerkorrektureinrichtung (4) ein erstes Phasenkorrektursignal (KBT) zugeführt wird, das die Korrektur eines Bits vor einem Signalübergang zwischen zwei binären Zuständen. angibt, und dem ein zweites Phasenkorrektursignal (KAT) zugeführt wird, das die Korrektur eines Bits nach einem Signalübergang zwischen zwei binären Zuständen angibt,
**dass** der Regler (6) dafür angepaßt ist, die Phasenkorrektursignale (KBT,KAT) zu zählen, dann die so erhaltenen Summen ($\Sigma$KBT, $\Sigma$KAT) zu vergleichen und ein Taktphase-Korrektursignal (PH) zu erzeugen, das die Phase des Abtasttaktsignals (TS) derart verstellt, dass zumindest annähernd die selbe Anzahl von Korrektursignalen ($\Sigma$KBT, $\Sigma$KAT) vor und nach einem Übergang zwischen den Binärzuständen auftritt.

**10.** Datenregenerator nach Anspruch 9,
**dadurch gekennzeichnet,**
**dass** ein Taktregenerator (3) dafür angepaßt ist, mit einer analogen Phasenregelung die Phase des Abtasttaktsignals (TS) zu regeln und dass die Phase des Abtasttaktsignals (TS) durch die Phasen-Korrektursignale (KBT, KAT) korrigiert wird.

**Claims**

1. Method for regulating the decision threshold (TH) and sampling phase (φ) of a data regenerator, in which, for regulating the decision threshold (TH), 1-bits detected as erroneous and 0-bits detected as erroneous are counted, then sums ($\sum$K1) of the 1-bits detected as erroneous and sums ($\sum$K0) of the 0-bits detected as erroneous which have been determined in this way are evaluated and the decision threshold (TH) is adjusted in such a way that an optimum ratio of the 1-bits and 0-bits detected as erroneous is achieved, and in which a regulation of the sampling phase (φ) of a sampling clock signal (TS) with respect to the phase of a binary signal (BS) and that of a data regenerator is effected by evaluation of error correction signals,
**characterized**
**in that**, for setting the sampling phase (φ), bits (KBT) detected as erroneous before a transition between binary states and bits (KAT) detected as erroneous after a transition between the binary states are counted separately as phase correction signals (KBT, KAT) and sums (ΣKBT, ΣKAT) of the phase correction signals which are obtained in this way are evaluated for the phase correction of the sampling clock signal (TS), and
**in that** the phase of the sampling clock signal (TS) is adjusted in such a way that at least approximately the same number of bits (ΣKBT, ΣKAT) detected as erroneous occurs before and after a transition between the binary states.

2. Method according to Claim 1,
**characterized**
**in that** the difference (ΣK1 - ΣK0) between the sums of the 1-bits and 0-bits detected as erroneous is formed, and in that this - difference is converted into an actuating signal for the decision threshold (TH).

3. Method according to Claim 2,
**characterized**
**in that**, in the case of balanced codes, the decision threshold (TH) is set in such a way that the difference (ΣK1 - ΣK0) becomes zero.

4. Method according to Claim 1,
**characterized**
**in that**, in the case of unbalanced codes, in the regulation of the decision threshold (TH), the ratio of 1-bits to 0-bits of the binary signal (BS) is taken into account.

5. Method according to Claim 1,
**characterized**
**in that**, in the case of unbalanced codes, the ratio of 1-bits (ΣK1) detected as erroneous to the total number of 0-bits (N0) is formed,
**in that** the ratio of the 0-bits (ΣK0) detected as erroneous to the total number (N0) of 1-bits (N1) is formed,
**in that** a comparison of the two quotients is carried out,
and **in that** the decision threshold is set on the basis of this comparison in such a way that the difference between the quotients becomes zero.

6. Method according to one of the preceding claims,
**characterized**
**in that** correction signals of an error correction device (4) are evaluated in a manner logically combined with the respective binary state of bits detected as erroneous (K1, K0).

7. Method according to one of the preceding claims,
**characterized**
**in that** the proportion of bits regarded as erroneous is used for controlling the time constant of a regulator (5, 6).

8. Method according to one of the preceding claims,
**characterized**
**in that** the regulation of the phase of the sampling clock signal (TS) is effected by means of an analogue phase regulation, and
**in that** a further phase correction of the sampling clock signal (TS) is effected by means of the phase correction signals (KBT, KAT) .

9. Data regenerator for regulating the decision threshold (TH) and sampling phase (φ) having a decision stage (1), to which are fed a binary signal (BS) and the decision threshold (TH) as comparison signal (TH), having a sampling flip-flop (2), whose data input (D) is connected to the output of the decision stage (1), and having a clock regenerator (3), which generates a sampling clock signal (TS) for the sampling flip-flop (2), with which the binary signal (BS) is stored in the sampling flip-flop (2),

having an error correction device (4), which is connected downstream of the sampling flip-flop (2), and having a first regulator (5) for regulating the decision threshold (TH), to which a first correction signal (K1) is fed from the error correction device (4), which signal indicates a correction of a 1-bit, and to which a second correction signal (K0) is fed, which indicates a correction of a 0-bit, the first regulator (5) being adapted for separately summing the two correction signals (K1, K0),

then for evaluating a sum ($\Sigma$K1) of the 1-bits detected as erroneous and a sum ($\Sigma$K0) of the 0-bits detected as erroneous which have been determined in this way, and for adjusting the decision threshold (TH) in such a way that an optimum ratio of the 1-bits and 0-bits detected as erroneous is achieved,

and having a second regulator (6), which is adapted, for the purpose of regulating the sampling phase ($\varphi$) of the sampling clock signal (TS) with respect to the phase of the binary signal (BS), for evaluating the error correction signals and for controlling the clock regenerator (3),

**characterized**

**in that**, for setting the sampling phase ($\varphi$) of a sampling clock signal (TS), a first phase correction signal (KBT) is fed to the second regulator (6) from the error correction device (4), which signal indicates the correction of a bit before a signal transition between two binary states, and to which regulator a second phase correction signal (KAT) is fed, which indicates the correction of a bit after a signal transition between two binary states,

**in that** the regulator (6) is adapted for counting the phase correction signals (KBT, KAT), then for comparing the sums ($\Sigma$KBT, $\Sigma$KAT) which are obtained in this way, and for generating a clock phase correction signal (PH) which adjusts the phase of the sampling clock signal (TS) in such a way that at least approximately the same number of correction signals ($\Sigma$KBT, $\Sigma$KAT) occurs before and after a transition between the binary states.

10. Data regenerator according to Claim 9,
    **characterized**
    **in that** a clock regenerator (3) is adapted for regulating the phase of the sampling clock signal (TS) with an analogue phase regulation,
    and **in that** the phase of the sampling clock signal (TS) is corrected.by means of the phase correction signals (KBT, KAT).

**Revendications**

1. Procédé d'ajustage du seuil de décision (TH) et de la phase d'échantillonnage ($\varphi$) d'un régénérateur de données, dans lequel des bits 1 identifiés comme étant erronés et des bits 0 identifiés comme étant erronés sont comptés pour l'ajustage du seuil de décision (TH), des sommes ($\Sigma$K1) des bits 1 identifiés comme étant erronés et des sommes ($\Sigma$K0) des bits 0 identifiés comme étant erronés qui ont été déterminées de cette façon étant évaluées et le seuil de décision (TH) étant réglé de façon telle, qu'un rapport optimal est obtenu entre les bits 1 et les bis 0 identifiés comme étant erronés, et dans lequel a lieu un ajustage de la phase d'échantillonnage ($\varphi$) d'un signal de rythme d'échantillonnage (TS) par rapport à la phase d'un signal binaire (BS) et celle d'un régénérateur de données, par évaluation de signaux de correction d'erreurs,
    **caractérisé en ce**
    **que** pour le réglage de la phase d'échantillonnage ($\varphi$) des bits (KBT) identifiés comme étant erronés avant une transition entre deux états binaires et des bits (KAT) identifiés comme étant erronés après une transition entre deux états binaires sont comptés séparément en tant que signaux de correction de phase (KBT, KAT) et des sommes obtenues de cette façon ($\Sigma$KBT, $\Sigma$KAT) des signaux de correction de phase sont évaluées pour la correction de phase du signal de rythme d'échantillonnage (TS) et
    **que** les phases du signal de rythme d'échantillonnage (TS) sont réglées de façon telle, qu'au moins approximativement le même nombre de bits identifiés comme étant erronés ($\Sigma$KBT, $\Sigma$KAT) apparaisse avant et après une transition entre deux états binaires.

2. Procédé selon la revendication 1,
    **caractérisé en ce**
    **que** la différence ($\Sigma$K1 - $\Sigma$K0) entre les sommes des bits 1 et des bits 0 identifiés comme étant erronés est formée et en ce que cette différence est convertie en un signal de réglage pour le seuil de décision (TH).

**3.** Procédé selon la revendication 2,
**caractérisé en ce**
**que** si les codes sont pondérés le seuil de décision (TH) est réglé de façon telle, que la différence (EK1 - ΣK0) devient 0.

**4.** Procédé selon la revendication 1,
**caractérisé en ce**
**que** si les codes sont non pondérés lors de l'ajustage du seuil de décision (TH), le rapport entre les bits 1 et les bits 0 du signal binaire (BS) est pris en considération.

**5.** Procédé selon la revendication 1,
**caractérisé en ce**
**que** si les codes sont non pondérés, le rapport entre des bits 1 (ΣK1) identifiés comme étant erronés et le nombre total des bits 0 (N0) est formé,
**que** le rapport entre les bits 0 identifiés comme étant erronés (ΣK0) et le nombre total (N0) des bits 1 (N1) est formé, et **qu'**une comparaison est effectuée entre les deux quotients,
et **que**, sur la base de cette comparaison, le seuil de décision est réglé de façon telle, que la différence entre les quotients devient 0.

**6.** Procédé selon l'une quelconque des revendications précédentes,
**caractérisé en ce**
**que** des signaux de correction d'un dispositif de correction des erreurs (4), combinés de façon logique avec l'état binaire respectif de bits identifiés comme étant erronés (K1, K0) sont évalués.

**7.** Procédé selon l'une quelconque des revendications précédentes,
**caractérisé en ce**
**que** la fraction des bits considérés comme étant erronés est utilisée pour piloter la constante de temps d'un régleur (5, 6).

**8.** Procédé selon l'une quelconque des revendications précédentes,
**caractérisé en ce**
**que** l'ajustage de la phase du signal de rythme d'échantillonnage (TS) a lieu par l'intermédiaire d'un ajustage de phase analogique
et **qu'**une autre correction de phase du signal de rythme d'échantillonnage (TS) résulte des signaux de correction des phases (KBT, KAT).

**9.** Régénérateur de données pour l'ajustage d'un seuil de décision (TH) et d'une phase d'échantillonnage (φ) , avec un étage de décision (1), auquel un signal binaire (BS) et le seuil de décision (TH) sont amenés en tant que signal de comparaison (TH), avec un étage de relaxation d'échantillonnage (2), dont l'entrée de données (D) est reliée à la sortie d'un étage de décision (1) et avec un régénérateur de rythme (3), qui génère un signal de rythme d'échantillonnage (TS) pour l'étage de relaxation d'échantillonnage (2), avec lequel le signal binaire (BS) est sauvegardé dans l'étage de relaxation d'échantillonnage (2),
avec un dispositif de correction des erreurs (4), qui est monté en aval de l'étage de relaxation d'échantillonnage (3) et
avec un premier régleur (5) pour l'ajustage du seuil de décision (TH), auquel le dispositif de correction des erreurs (4) amène un premier signal de correction (K1) qui indique la correction d'un bit 1 et auquel un second signal de correction (K0) qui indique la correction d'un bit 0 est amené, le premier régleur (5) étant adapté pour additionner séparément les deux signaux de correction (K1, K0)
et pour évaluer ensuite une somme (ΣK1 ) déterminée de cette façon des bits 1 identifiés comme étant erronés et une somme (ΣK0) des bits 0 identifiés comme étant erronés et pour régler le seuil de décision (TH) de façon telle, qu'un rapport optimal est obtenu entre les bits 1 et les bits 0 identifiés comme étant erronés
et avec un second régleur (6) qui est adapté pour l'ajustage de la phase d'échantillonnage (φ) du signal de rythme d'échantillonnage (TS) par rapport à la phase du signal binaire (BS), pour évaluer les signaux de correction des erreurs et pour piloter le régénérateur de rythme (3),
**caractérisé en ce**
**que** pour le réglage de la phase d'échantillonnage (φ) d'un signal de rythme d'échantillonnage (TS), un premier signal de correction de phase (KBT) qui indique la correction d'un bit avant une transition de signal entre deux états binaires est amené par le dispositif de correction d'erreurs (4) au second régleur (6) et un second signal de correction de phase (KAT) indiquant la correction d'un bit après transition de signal entre deux états binaires lui est amené,

**que** le régleur (6) est adapté pour compter les signaux de correction de phase (KBT, KAT), pour comparer ensuite les sommes ainsi obtenues (ΣKBT, ΣKAT) et pour générer un signal de correction de la phase de rythme (PH), qui règle la phase du signal de rythme d'échantillonnage (TS) de façon telle, qu'au moins approximativement le même nombre de signaux de correction (ΣKBT, ΣKAT) apparaît avant et après la transition entre deux états binaires.

**10.** Régénérateur de données selon la revendication 9,
**caractérisé en ce**
**qu'**un régénérateur de rythme (3) est adapté pour ajuster la phase du signal de rythme d'échantillonnage (TS) par un ajustage de phase analogique et en ce que la phase du signal de rythme d'échantillonnage (TS) est corrigée par les signaux de correction de phases (KBT, KAT).

# FIG 1

# FIG 2

# FIG 3